(19) Europäisches Patentamt
European Patent Office
Office européen des brevets

(11) Numéro de publication: **0 299 838 B1**

(12) **FASCICULE DE BREVET EUROPEEN**

(45) Date de publication de fascicule du brevet: **17.06.92**

(51) Int. Cl.5: **C25B 1/00**, C01F 17/00

(21) Numéro de dépôt: **88401705.4**

(22) Date de dépôt: **01.07.88**

# (54) Procédé de réduction par électrolyse et de séparation de l'europium.

(30) Priorité: **17.07.87 FR 8710110**

(43) Date de publication de la demande:
**18.01.89 Bulletin 89/03**

(45) Mention de la délivrance du brevet:
**17.06.92 Bulletin 92/25**

(84) Etats contractants désignés:
**AT BE CH DE ES FR GB GR IT LI LU NL SE**

(56) Documents cités:
**EP-A- 0 198 736**
**DE-B- 1 188 061**

**CHEMICAL ABSTRACTS, vol. 101, no. 10, 3 septembre 1984, page 502, résumé no. 80655j, Columbus, Ohio, US; N.V. ZHOLUDEVA et al.: "Studies of the electrochemical reduction of europium(III) to europium(II) from aqueous solutions on solid cathodes", & ISSLED. V OBL. REDK. MET., M. 1983, 97-102**

**CHEMICAL ABSTRACTS, vol. 105, no. 12, septembre 1986, page 142, résumé no. 99923z, Columbus, Ohio, US; & JP-A-61 83 624 (MITSUBISHI CHEMICAL INDUSTRIES CO. LTD) 28-04-1986**

**L.F. YNTEMA, vol. 52, pp. 2782-2785, The separation of europium**

(73) Titulaire: **RHONE-POULENC CHIMIE**
**25, quai Paul Doumer**
**F-92408 Courbevoie Cédex(FR)**

(72) Inventeur: **Dumousseau, Jean-Yves**
**60, rue des Dames**
**F-75017 Paris(FR)**
Inventeur: **Rollat, Alain**
**Résidence des Parcs Beaudelaire 19, rue de Suède**
**F-17000 La Rochelle(FR)**
Inventeur: **Sabot, Jean-Louis**
**3, avenue Pascal**
**F-78600 Maisons Laffitte(FR)**

(74) Mandataire: **Dutruc-Rosset, Marie-Claude et al**
**RHONE-POULENC INTERSERVICES Service Brevets Chimie 25, Ouai Paul Doumer**
**F-92408 Courbevoie Cédex(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 299 838 B1

## Description

La présente invention concerne un procédé de réduction par électrolyse et de séparation de l'europium ainsi qu'une cellule d'électrolyse pour la mise en oeuvre de ce procédé.

L'europium est un élément dont la teneur dans les minerais est généralement trés faible comparée à celles des autres terres rares. D'autre part, ses applications, en luminescence notamment, exigent de grandes puretés. Il y a donc pour cet élément un double probléme de séparation et de purification.

Généralement, l'obtention de l'europium fait appel à des procédés dans lesquels on réalise dans une premiére étape une réduction de l'europium (III) en europium (II) puis dans une deuxième étape un traitement chimique présentant une grande spécificité vis-à-vis de l'europium.

Plus précisement, on procéde de la façon suivante. On part habituellement d'une solution de chlorure de terres rares qui est soumise à un traitement sur colonne de zinc ou d'amalgame de zinc (colonnes de Jones). On précipite ensuite le sulfate europeux à partir de cette solution ainsi traitée par ajout d'ions sulfates.

Un tel procédé présente plusieurs inconvénients.

Il présente tout d'abord un manque de souplesse. Par ailleurs, il y a passage de zinc et de mercure solution. Le zinc est génant pour les séparations ultérieures des terres rares et les eaux mères de la colonne de Jones doivent subir un traitement de dépollution spécifique du mercure.

Enfin, le rendement et la pureté sont insuffisants.

Toutefois, les taux de transformation et les rendements faradiques restent généralement insuffisants.

Des procédés par électrolyse ont été proposés pour la réduction de l'europium comme dans l'article "Studies of the electrochemical reduction de l'europium III to europium II from aqueous solutions on solid cathodes" par Zholudeva et al publiée dans ref. Zh. Khim 1984 n° 12B3344.

Un premier objet de l'invention est donc un procédé de réduction électrolytique présentant un rendement élevé pour des taux de transformation importants de l'europium III en europium II.

Un second objet de l'invention est un procédé de séparation de l'europium permettant d'obtenir cet élément avec une pureté trés élevée.

Dans ce but le procédé de réduction par électrolyse de l'europium sels l'invention consistant à faire circuler une solution comprenant de l'europium (III) dans le compartiment cathodique d'une cellule d'électrolyse caractérisé en ce qu'elle est munie d'une cathode en graphite et dont le compartiment cathodique est séparé du compartiment anodique par une membrane échangeuse d'ions du type cationique ; on applique un courant d'électrolyse à la cellule ce à quoi on obtient à la sortie du compartiment de l'europium (II).

Par ailleurs, le procédé de séparation de l'europium selon l'invention est caractérisé en ce qu'on met en contact la solution comprenant de l'europium (II) issue du compartiment cathodique précité avec une solution organique comprenant au moins un solvant choisi dans le groupe des esters acides, des acides phosphoriques ou phosphoniques, ce par quoi on obtient apres séparation des phases une phase aqueuse chargée en europium (II) et une phase organique.

D'autres caractéristiques et avantages de l'invention seront mieux compris à la lecture de la description et des exemples concrets mais non limitatifs qui vont suivre.

L'invention repose sur l'utilisation d'une cellule d'électrolyse qui peut être par exemple du type filtre-presse et comprenant un compartiment cathodique et un compartiment anodique séparés par une membrane échangeuse d'ions.

Selon une caractéristique de l'invention, cette membrane est du type cationique notamment avec un groupe acide fort ou faible. On utilise de préférence les membranes de type sulfonique. Comme exemple de telles membranes, on peut citer celles vendues sous la marque NAFION notamment NAFION® 415 ou 423.

D'autre part, selon l'invention, la cathode est en graphite, de préférence en graphite massif. En ce qui concerne l'anode celle-ci peut être de différents types selon l'anolyte utilisé, comme on le verra plus loin. Généralement, on emploie une anode en nickel ou à base de métaux précieux ou d'oxyde de ces métaux par exemple platine, oxyde de titane, oxyde de ruthénium, de préférence massif.

Bien entendu, d'une manière connue en soi, les compartiments de la cellule peuvent être équipés de promoteurs de turbulence pour augmenter les transferts de masse.

La solution de départ à traiter dans la cellule de l'invention est une solution comprenant de l'europium essentiellement sous forme d'europium III en particulier sous forme chlorure. D'une manière générale, il s'agit d'une solution comprenant un mélange de terres rares essentiellement trivalentes, notamment sous forme de chlorures.

On notera que le procédé de réduction et de séparation de l'invention s'applique particulièrement bien

aux solutions comprenant, outre l'europium, du samarium et du gadolinium, éléments proches et donc difficiles à séparer de celui-là.

Par ailleurs, la solution de départ peut en outre comporter un certain nombre d'impuretés, en particulier les métaux présents dans l'eau utilisée pour dissoudre les réactifs, par exemple la calcium.

Comme indiqué plus haut, la solution de départ qui vient d'être décrite est introduite et circule dans le compartiment cathodique d'une cellule selon l'invention.

En ce qui concerne l'anolyte circulant dans le compartiment anodique plusieurs possibilités sont envisageables.

Selon une variante préférée de l'invention, on utilise un anolyte de composition telle qu'il permet un dégagement d'oxygène à l'anode, lors du déroulement de l'électrolyse.

Dans le cadre de cette variante, deux modes de réalisation peuvent être envisagés.

Selon un premier mode l'anolyte est une solution d'acide sulfurique qui peut en outre contenir un sulfate, par exemple du sulfate d'ammonium.

Dans un tel cas, on utilise de préférence une anode en alliage platine-iridium.

Toutefois, compte tenu des risques de précipitation de $EuSO_4$ on préfère, selon un second mode de réalisation, employer comme anolyte une solution de soude. Dans ce cas on utilise une anode en nickel.

Il serait bien entendu possible d'envisager une autre variante bien que moins intéressante industriellement selon laquelle on emploie un anolyte dégageant du chlore et qui pourrait être par exemple une solution de chlorures de terres rares. Cette solution pourrait provenir, comme on le verra plus loin, de la solution obtenue après traitement par électrolyse et séparation de l'europium (II).

En ce qui concerne les conditions de marche, on s'est aperçu qu'il était avantageux de maintenir le pH de la solution circulant dans le compartiment cathodique à une valeur comprise entre 1 et 3. Dans ces conditions la réduction de Eu (III) s'effectue avec un rendement quantitatif.

Cette régulation du pH se fait d'une manière connue en soi par exemple par addition d'HCl dans le catholyte.

Par suite de l'électrolyse, la solution issue du compartiment cathodique est enrichie en Eu (II). Bien entendu, d'une manière classique, cette solution peut être recyclée au moins en partie dans le compartiment cathodique. Une circulation du même type peut être envisagée pour l'anolyte.

On peut d'autre part utiliser plusieurs cellules d'électrolyse montée en série liquide. Dans ce cas, la solution à traiter circule dans le compartiment cathodique d'une première cellule puis la solution issue de ce compartiment, dont au moins une partie peut être recyclée comme indiqué plus haut, passe successivement dans le compartiment cathodique d'une seconde et d'une troisième cellule, avec recyclage éventuel à chaque cellule.

Le nombre de cellules peut varier et être éventuellement supérieur à trois, ce nombre résultant d'un compromis entre les différentes conditions à remplir pour obtenir une marche industrielle la plus économique possible.

On notera que dans le cas de cellules en série il est intéressant de travailler avec des intensités de courant différentes pour chaque cellule et décroissantes par rapport au sens de circulation de la solution comprenant l'Eu (III).

Grâce au procédé de l'invention, on peut obtenir à la fois un taux de transformation de l'Eu (III) en Eu (II) d'au moins 90 % avec un rendement faradique identique ou du même ordre de grandeur.

La solution d'europium (II) obtenue à l'issue du procédé d'électrolyse doit ensuite être traitée pour séparer cet élément.

Ce traitement peut se faire d'une manière connue en soi c'est-à-dire par addition d'un sulfate, généralement sulfate d'ammonium et précipitation du sulfate europeux. Après séparation du précipité, la solution de chlorures de terres rares peut être recyclée comme anolyte dans le compartiment anodique de la ou des cellules d'électrolyse.

Toutefois ce traitement classique est limité en ce qui concerne la pureté de l'europium obtenu, cette limite étant imposée par les produits de solubilité.

C'est pourquoi, selon un mode de réalisation préféré de l'invention, la séparation de l'europium se fait par extraction liquide-liquide.

Dans ce cas, la solution d'Eu (II) est mise en contact avec une solution organique à base d'un extractant choisi dans le groupe des esters acides des acides phosphorique et phosphonique.

On entend par là les composés de formules :

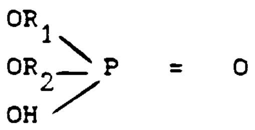 (1) et 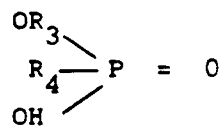 (2)

dans lesquelles $R_1$, $R_2$, $R_3$ et $R_4$ peuvent être identiques ou différents et représentent des radicaux alkyles, alicycliques, aryles, alkyles-aryles linéaires ou ramifiés.

Ce sont de préférence des composés peu ou non miscibles à l'eau et notamment ceux pour lesquels au moins un des $R_1$, $R_2$, $R_3$ et $R_4$ a au moins quatre atomes de carbone.

Comme exemple d'extractants, on peut citer le bis(éthyl-2-hexyl hydrogénophosphonate vendu sous le nom PC 88A par la Société Daïchachi, l'acide bis(éthyl-2-hexyl) orthophosphorique, l'éthyl-2 hexyl hydrogéno phényl phosphonate, le n-octyl hydrogéno chlorométhylphosphonate, l'acide dioctylphényl orthophosphorique, l'acide bis(méthyl-1 heptyl) orthophosphorique.

La solution organique peut en outre comprendre un diluant généralement choisi parmi les hydrocarbures aliphatiques ou aromatiques tels que le toluène, le benzène, le kérosène.

La proportion d'extractant dans la solution organique pourra varier généralement entre 10 et 60% en volume.

La mise en contact des solutions se fait d'une manière connue dans un appareillage du type mélangeur-décanteur ou colonne par exemple, de préférence sous atmosphère inerte.

Avantageusement l'extraction est réalisée en continu et à contre-courant sur plusieurs étages.

A l'issue de cette mise en contact on sépare les phases et on obtient une première phase aqueuse chargée en europium (II), cet élément restant donc essentiellement dans la phase aqueuse et une première phase organique, dans laquelle ont été extraites les autres terres rares éventuellement présentes dans la solution aqueuse de départ notamment le samarium et le gadolinium.

La phase organique résultante de cette première mise en contact peut être avantageusement lavée à contre-courant par une solution d'un acide non oxydant (par exemple l'acide chlorhydrique 0,5 N) pour récupérer l'europium (II) qui peut y être présent en faible quantité.

La même phase organique, après ce lavage éventuel, peut être encore mise en contact avec une solution acide (par exemple acide chlorhydrique 6N) pour extraire du solvant les faibles quantités éventuelles d'europium III et généralement les autres terres rares.

Cette phase organique pourra enfin après ces traitements être recyclée à la première étape de mise en contact et d'extraction décrite plus haut.

Le procédé de l'invention permet d'obtenir un europium de très haute pureté, c'est-à-dire en particulier des rapports $Sm_2O_3/Eu_2O_3 < 10$ ppm.

Comme on l'a indiqué plus haut, la solution aqueuse d'europium (II) peut contenir d'autres impuretés métaliques telles que le calcium ou le sodium provenant de l'électrolyse. Généralement, ces impuretés restent avec l'europium dans la première phase aqueuse précitée.

La purification peut alors être conduite de la manière suivante.

La première phase aqueuse chargée en Eu (II) et impuretés est traitée de manière à oxyder l'europium. Cette oxydation peut se faire par exemple au moyen de l'oxygène de l'air avec addition d'un acide tel que l'acide chlorhydrique. Elle est ensuite mise en contact avec une solution organique comprenant un extractant cationique et qui peut être par exemple du même type que celle qui a été décrite plus haut pour la séparation europium-terres rares. Cette solution pourrait éventuellement être au moins en partie la solution organique issue de la première étape de mise en contact et de séparation de l'europium décrite ci-dessus après le cas échéant lavage et traitements mentionnés plus haut. Cette mise en contact peut se faire dans les mêmes conditions que celles qui ont été données pour cette séparation.

Après séparation des phases, on obtient une second phase aqueuse qui constitue un effluent et dans laquelle sont passées les impuretés métalliques comme le calcium et le sodium et une seconde phase organique chargée en europium (III).

La réextraction de l'europium peut se faire par mise en contact de cette seconde phase organique avec une solution aqueuse acide telle que par exemple une solution d'HCl.

Après séparation des phases, ou obtient une troisième phase aqueuse chargée en europium (III) qui constitue la production et une troisième phase organique. Cette troisième phase peut être recyclée à la première étape de séparation europium-terres rares décrite ci-dessus.

A l'issue de ces différentes étapes les puretés en calcium et sodium exprimées en rapport $CaO/Eu_2O_3$ et $Na_2O/Eu_2O_3$ peuvent être inférieures à 10 ppm.

Des exemples non limitatifs de mise en oeuvre de l'invention vont maintenant être donnés.

EXEMPLE 1

On utilise une cellule d'électrolyse présentant les caractéristiques suivantes :

Anode : nickel,
Cathode : graphite massif,
Membrane : NAFION® 423,
Surface d'électrode : 0,5 $m^2$.

On y fait circuler une solution aqueuse d'oxydes de terres rares de composition ci-dessous, les pourcentages étant en poids :

Oxydes de terres rares : 400 g/l,
$Eu_2O_3$ : 85 % (1,93 Mole/l)
$Sm_2O_3$ : 5 %,
$Gd_2O_3$ : 5%
$Tb_4O_7$ : 3 %
$Dy_2O_3$ : 2 %
CaO/Oxydes de terres rares : 350 ppm.
Les conditions d'électrolyse sont les suivantes :
Anolyte : soude 1 mole/l
Débit d'alimentation en catholyte : 3,68 l/h
Densité de courant : 4 A/dm2
Débit de recirculation en catholyte : 1 m3/h
Intensité : 200 A
Tension de la cellule : 1,8 V.

On obtient une solution en sortie du compartiment cathodique présentant une concentration en Eu (III) de 0,15 mole/l soit 27 g/l. Le taux de transformation est de 92 %, le rendement faradique de 88 %. La puissance consomée est de 0,312 KWh/kg de $Eu_2O_3$.

EXEMPLE 2

On utilise trois cellules d'électrolyse toutes identiques à celles de l'exemple 1 et montée en série liquide.

On fait entrer dans la première cellule une solution d'europium à une concentration de 70 g/l en $Eu_2O_3$ soit 0,40 M et à un débit de 400 l/jour. Le débit de recirculation est de 1,2 $m^3/h$ . Les conditions d'électrolyse sont les suivantes :

| N° de cellule | Taux de transformation % | I(A) | Tension (V) |
|---|---|---|---|
| 1 | 63,2 | 130 | 1,7 |
| 2 | 86,5 | 48 | 1,3 |
| 3 | 95,0 | 38 | 1,2 |

La consommation électrique est de 0,295 Kwh/Kg $Eu_2O_3$.

EXEMPLE 3

On part d'une solution aqueuse d'oxydes de terres rares issue du compartiment cathodique d'une cellule d'électrolyse selon l'invention sous un débit de 3,44 l/h. Elle présente la composition donnée dans l'exemple 1 avec un rapport en poids Eu (II)/Eu total de 90 % et $Na_2O$/oxydes de terres rares de 21 %.

Dans cet exemple d'une manière générale les mises en contact entre les différentes phases se font à contre-courant.

La solution alimente une première batterie d'extraction qui reçoit aussi un débit de 16 l/h d'une solution organique de PC 88 A® à 1 mole/litre dans du kérosène et de 0,6 l/h d'une solution d'ammoniaque 10 N.

La phase organique sortante est lavée, par une solution HCl, 0,5 N à un debit de 0,54 l/h puis dans une autre batterie, elle est mise en contact avec une solution d'HCl 6N à 1 l/h et recyclée à la première batterie d'extraction.

La phase aqueuse sortante est traitée à l'oxygène et à l'HCl 6N à 1 l/h et elle alimente une troisième batterie d'extraction qui reçoit par ailleurs une solution d'ammoniaque 10 N à un débit de 1,8 l/h ainsi

qu'une phase organique identique à celle décrite dans le paragraphe précédent et à un débit de 45 l/h.

La phase organique sortante est lavée avec une solution d'HCl 0,5 N à un débit de 2 l/h puis elle alimente une quatrième batterie qui reçoit une solution HCl 6N sous un débit de 3,2 l/h. Il en ressort une phase aqueuse de composition suivante :

$Eu_2O_3$ = 330 g/l
$Tr_2O_3/EuO_3$ < 10 ppm
$CaO/Eu_2O_3$ < 10 ppm.
$Na_2O/Eu_2O_3$ = 50 ppm.

La phase organique peut être recyclée en tête de la 3ème batterie.

**Revendications**

1. Procédé de réduction par électrolyse et de séparation de l'europium consistant à faire circuler une solution comprenant de l'europium (III) dans le compartiment cathodique d'une cellule d'électrolyse et à séparer de la solution sortante dudit compartiment cathodique l'europium (II) des autres éléments, caractérisé en ce qu'il consiste à utiliser comme élément de séparation entre le compartiment cathodique et le compartiment anodique de la cellule, une membrane échange d'ions du type cationique, en ce que la cathode est en graphite, et en ce que l'on maintient le pH de la solution circulant dans le compartiment cathodique à une valeur comprise entre 1 et 3

2. Procédé selon la revendication 1, caractérisé en ce que la membrane échangeuse d'ions est de type sulfonique.

3. Procédé selon la revendication 1 ou 2 caractérisé en ce qu'on fait circuler dans le compartiment anodique un anolyte de composition telle qu'il permet un dégagement d'oxygéne à l'anode.

4. Procédé selon la revendication 3, caractérisé en ce que l'anolyte est une solution d'acide sulfurique et d'un sulfate.

5. Procédé selon la revendication 3, caractérisé en ce que l'anolyte est une solution de soude.

6. Procédé selon la revendication 4, caractérisé en ce qu'on utilise une cellule d'électrolyse dont l'anode est en platine.

7. Procédé selon la revendication 5, caractérisé en ce qu'on utilise une cellule d'électrolyse dont l'anode en nickel.

8. Procédé selon l'une quelconque des revendications 1 à 7, caractérisé en ce qu'on fait entrer et circuler dans le compartiment cathodique une solution comprenant de l'europium (III) sous forme chlorure.

9. Procédé selon l'une quelconque des revendications précédentes, caractérisé en ce qu'on fait entrer et circuler dans le compartiment cathodique une solution comprenant en outre des terres rares.

10. Procédé selon la revendication 9, caractérisé en ce que les terres sont le samarium et le gadolinium.

11. Procédé selon l'une quelconque des revendications précédentes, caractérisé en ce qu'on fait entrer et circuler la solution comprenant de l'europium (III) successivement dans les compartiments cathodiques de cellules d'électrolyse montées en série.

12. Procédé selon l'une quelconque des revendications précédentes caractérisé en ce qu'on recycle dans le ou les compartiments cathodiques au moins en partie la solution issue de ce ou ces compartiments.

13. Procédé selon la revendication 11 ou 12, caractérisé en ce qu'on applique dans chaque cellule d'électrolyse un courant d'électrolyse d'intensité décroissante par rapport au sens de circulation de la solution comprenant l'europium (III).

14. Procédé selon l'une quelconque des revendications précédentes, caractérisé en ce que la séparation de l'europium est réalisée de sulfate europeux à partir de la solution comprenant de l'europium (II).

**15.** Procédé de séparation de l'europium selon l'une quelconque des revendications 1 à 14 caractérisé en ce qu'on met en contact la solution comprenant de l'europium (II) issue du ou des compartiments cathodiques précités avec une solution organique comprenant au moins un extractant choisi dans le groupe des esters acides des acides phosphorique ou phosphonique ce par quoi on obtient aprés séparation des phases une première phase aqueuse chargée en europium (II) et une première phase organique.

**16.** Procédé selon la revendication 15, caractérisé en ce que l'ester précité est choisi dans le groupe des alkyles, aryles, alkyles-aryles, esters acides phosphorique ou phosphonique.

**17.** Procédé selon l'une des revendications 15 ou 16, caractérisé en ce que l'ester précité est le di(éthyl-2-hexyl)hydrogéno phosphonate.

**18.** Procédé selon l'une des revendications 15 à 17, caractérisé en ce que la solution organique comprend un hydrocarbure aliphatique ou aromatique.

**19.** Procédé selon l'une des revendications 15 à 18, caractérisé en ce que la premiére phase aqueuse précitée est traitée de maniére à oxyder l'europium puis mise en contact avec une solution organique comprenant un extractant cationique ce par quoi on obtient aprés séparation des phases une seconde phase aqueuse et une seconde phase organique chargée en europium (III).

**20.** Procédé selon la revendication 19, caractérisé en ce que la seconde phase organique est mise en contact avec une solution aqueuse acide ce par quoi on obtient aprés séparation des phases une troisième phase aqueuse chargée en europium (III) et une troisiéme phase organique.

**Claims**

**1.** A process for the reduction by electrolysis and separation of europium comprising circulating a solution comprising europium (III) in the cathodic compartment of an electrolytic cell and separating from the solution issuing from said cathodic compartment the europium (II) from the other elements, characterised in that it comprises using as a separation element between the cathodic compartment and the anodic compartment of the cell an ion exchange crane of the cationic type, that the cathode is of graphite, and that the pH of the solution circulating in the cathodic compartment is maintained at a value of between 1 and 3.

**2.** A process according to claim 1 characterised in that the ion exchange membrane is of sulphonic type.

**3.** A process according to claim 1 or claim 2 characterised in that an anolyte of a composition such that it allows oxygen to be liberated at the anode is circulated in the anodic compartment.

**4.** A process according to claim 3 characterised in that the anolyte is a solution of sulphuric acid and a sulphate.

**5.** A process according to claim 3 characterised in that the anolyte is a sodium hydroxide solution.

**6.** A process according to claim 4 characterised by using an electrolytic cell with the anode made of platinum.

**7.** A process according to claim 5 characterised by using an electrolytic cell with the anode made of nickel.

**8.** A process according to any one of claim 1 to 7 characterised in that a solution comprising europium (III) in its chloride form is fed into and circulated in the cathodic compartment.

**9.** A process according to any one of the preceding claims characterised in that a solution further comprising rare earths is fed into and circulated in the cathodic compartment.

**10.** A process according to claim 9 characterised in that the earths are samarium and gadolinium.

11. A process according to any one of the preceding claims characterised in that the solution comprising europium (III) is successively fed into and circulated in the cathodic compartments of electrolytic cells mounted in series.

12. A process according to any one of the preceding claims characterised in that the solution issuing from the cathodic compartment or compartments is at least partly recycled to the cathodic compartment or compartments.

13. A process according to claim 11 or claim 12 characterised in that an electrolysis current of a strength which decreases relative to the direction of circulation of the solution comprising the europium (III) is applied to each electrolytic cell.

14. A process according to any one of the preceding claims characterised in that the separation of the europium is effected by precipitation of europous sulphate from the solution comprising europium (II).

15. A process for separating europium according to any one of claims 1 to 14 characterised in that the solution comprising europium (II) issuing from said cathodic compartment or compartments is brought into contact with an organic solution comprising at least one extraction agent selected from the group of acid esters of phosphoric or phosphonic acids, whereby a first aqueous phase charged with europium (II) and a first organic phase are obtained after phase separation.

16. A process according to claim 15 characterised in that said ester is selected from the group of alkyls, aryls, alkyl aryls or phosphoric or phosphonic acid esters.

17. A process according to claim 15 or claim 16 characterised in that said ester is di(2-ethyl hexyl) hydrogen phosphonate.

18. A process according to one of claims 15 to 17 characterised in that the organic solution comprises an aliphatic or aromatic hydrocarbon.

19. A process according to one of claims 15 to 18 characterised in that said first aqueous phase is treated so as to oxidise the europium, then brought into contact with an organic solution comprising a cationic extraction agent, thereby producing after separation of the phases a second aqueous phase and a second organic phase which is charged with europium (III).

20. A process according to claim 19 characterised in that the second organic phase is brought into contact with an aqueous acid solution, thereby producing after separation of the phases a third aqueous phase which is charged with europium (III) and a third organic phase.

## Patentansprüche

1. Verfahren der Reduktion mittels Elektrolyse und der Abtrennung von Europium, das darin besteht, daß man eine Lösung, die Europium (III) enthält, in der Kathodenkammer einer Elektrolysezelle umlaufen läßt und aus der aus dieser Kathodenkammer austretenden Lösung Europium (II) von den anderen Elementen abtrennt, dadurch gekennzeichnet, daß man als Trennelement zwischen der Kathodenkammer und der Anodenkammer der Zelle eine Ionenaustauschermembran vom kationischen Typ einsetzt, daß die Kathode aus Graphit besteht und daß man den pH-Wert der Lösung, die in der Kathodenkammer umläuft, bei 1 bis 3 hält.

2. Verfahren nach Anspruch 1, dadurch gekennzeichnet, daß die Ionenaustauschermembran dem Sulfontyp angehört.

3. Verfahren nach Anspruch 1 oder 2, dadurch gekennzeichnet, daß man in der Anodenkammer einen Anolyten solcher Zusammensetzung umlaufen läßt, daß er eine Freisetzung von Sauerstoff an der Anode ermöglicht.

4. Verfahren nach Anspruch 3, dadurch gekennzeichnet, daß der Anolyt eine Lösung aus Schwefelsäure und einem Sulfat ist.

5. Verfahren nach Anspruch 3, dadurch gekennzeichnet, daß der Anolyt eine Natronlauge ist.

6. Verfahren nach Anspruch 4, dadurch gekennzeichnet, daß man eine Elektrolysezelle verwendet, deren Anode aus Platin besteht.

7. Verfahren nach Anspruch 5, dadurch gekennzeichnet, daß man eine Elektrolysezelle verwendet, deren Anode aus Nickel besteht.

8. Verfahren nach einem der Ansprüche 1 bis 7, dadurch gekennzeichnet, daß man in die Kathodenkammer eine Lösung einbringt und umlaufen läßt, die Europium (III) als Chlorid enthält.

9. Verfahren nach einem der vorangehenden Ansprüche, dadurch gekennzeichnet, daß man in die Kathodenkammer eine Lösung einbringt und umlaufen läßt, die zusätzlich Seltene Erden enthält.

10. Verfahren nach Anspruch 9, dadurch gekennzeichnet, daß die Erden Samarium und Gadolinium sind.

11. Verfahren nach einem der vorangehenden Ansprüche, dadurch gekennzeichnet, daß man die Lösung, die Europium (III) enthält, nacheinander in die Kathodenkammern der in Reihe geschalteten Elektrolysezellen einbringt und umlaufen läßt.

12. Verfahren nach einem der vorangehenden Ansprüche, dadurch gekennzeichnet, daß man in der oder den Kathodenkammer(n) mindestens teilweise die aus dieser oder diesen Kammer(n) ausgetretenen Lösungen umlaufen läßt.

13. Verfahren nach Anspruch 11 oder 12, dadurch gekennzeichnet, daß man in jeder Elektrolysezelle einen Elektrolysestrom anlegt, dessen Intensität mit Bezug auf die Umlaufrichtung der Lösung, die das Europium (III) enthält, abnimmt.

14. Verfahren nach einem der vorangehenden Ansprüche, dadurch gekennzeichnet, daß die Abtrennung des Europiums durch Ausfällung von Europium-(II)-sulfat, ausgehend von der Lösung, die Europium (II) enthält, erfolgt.

15. Verfahren der Abtrennung von Europium nach einem der Ansprüche 1 bis 14, dadurch gekennzeichnet, daß an die Lösung, die Europium (II) enthält und aus der oder den vorgenannten Kathodenkammer(n) erhalten worden ist, mit einer organischen Lösung in Berührung bringt, die mindestens ein Extraktionsmittel aus der Gruppe der sauren Ester von Phosphorsäure oder Phosphonsäure enthält, wodurch man nach der Trennung der Phasen eine erste wäßrige Phase, die mit Europium (II) beladen ist, und eine erste organische Phase erhält.

16. Verfahren nach Anspruch 15, dadurch gekennzeichnet, daß der vorgenannte Ester aus der Gruppe der sauren Phosphorsäure-oder Phosphonsäure-alkyl-, -aryl-, -alkylaryl-ester erhalten worden ist.

17. Verfahren nach einem der Ansprüche 15 oder 16, dadurch gekennzeichnet, daß der vorgenannte Ester Di(2-ethylhexyl)hydrogenphosphat ist.

18. Verfahren nach einem der Ansprüche 15 bis 17, dadurch gekennzeichnet, daß die organische Lösung einen aliphatischen oder aromatischen Kohlenwasserstoff enthält.

19. Verfahren nach einem der Ansprüche 15 bis 18, dadurch gekennzeichnet, daß die erste vorgenannte wäßrige Phase so behandelt wird, daß das Europium oxidiert wird und daß sie dann mit einer organischen Lösung in Berührung gebracht wird, die ein kationisches Extraktionsmittel enthält, wodurch man nach der Trennung der Phasen eine zweite wäßrige Phase und eine zweite organische Phase, die mit Europium (III) beladen ist, erhält.

20. Verfahren nach Anspruch 19, dadurch gekennzeichnet, daß die zweite organische Phase mit einer wäßrigen sauren Lösung in Berührung gebracht wird, wodurch man nach dem Trennen der Phasen eine dritte wäßrige Phase, die mit Europium (III) beladen ist, und eine dritte organische Phase erhält.